# EUROPÄISCHE PATENTSCHRIFT

(11) **EP 0 699 514 B1**
(45) Veröffentlichungstag und Bekanntmachung des Hinweises auf die Patenterteilung: **06.03.2002**
(21) Anmeldenummer: 95111728.2
(22) Anmeldetag: 26.07.1995
(51) Int. Cl.: B29C 45/76

(54) **Verfahren zum rechnerunterstützten Ermitteln des optimalen Arbeitspunktes einer Spritzgiessmaschine**
Computer supported process to determine the optimum working point of an injection molding machine
Procédé assisté par ordinateur pour la détermination des paramètres optimaux de travail d'une presse à injecter

(30) Priorität: 31.08.1994 AT 167094
(43) Veröffentlichungstag der Anmeldung: 06.03.1996
(73) Patentinhaber: Battenfeld Kunststoffmaschinen Ges.m.b.H., A-2542 Kottingbrunn (AT)
(72) Erfinder: Müssler, Richard, A-7035 Steinbrunn (AT); Mayer, Franz, Dipl. Ing. Dr. Techn., A-1160 Wien (AT); Graf, Horst, A-1220 Wien (AT)

(56) Entgegenhaltungen:
- EP-A- 0 455 820
- EP-A- 0 566 738
- EP-A- 0 607 431
- EP-A- 0 698 467
- WO-A-91/14562
- DE-A- 4 025 221
- US-A- 5 316 707
- PATENT ABSTRACTS OF JAPAN vol. 016, no. 480 (M-1321), 6.Oktober 1992 & JP 04 175129 A (SUMITOMO HEAVY IND LTD), 23.Juni 1992,
- PATENT ABSTRACTS OF JAPAN vol. 013, no. 033 (M-789), 25.Januar 1989 & JP 63 242620 A (MEIKI CO LTD), 7.Oktober 1988,
- PATENT ABSTRACTS OF JAPAN vol. 016, no. 165 (M-1238), 21.April 1992 & JP 04 012821 A (TOYO MACH & METAL CO LTD), 17.Januar 1992,

## Beschreibung

Die Erfindung betrifft ein Verfahren zum rechnerunterstützten Ermitteln des optimalen Arbeitspunktes einer mit einer Maschinensteuerung ausgestatteten Spritzgießmaschine,
- bei dem die Maschinenparameter und die Werkstoffparameter in der Maschinensteuerung gespeichert sind
- und bei dem die spezifischen Werkzeugparameter in die Maschinensteuerung eingegeben werden.
wobei
- in der Maschinensteuerung auf Basis der in dieser hinterlegten Maschinenparameter, Werkstoffparameter und Werkzeugparameter alle für den Spritzgießprozeß erforderlichen Prozeßparameter rechnerunterstützt ermittelt werden, und
- die Werkstoffparameter für eine Vielzahl von verschiedenen Werkstoffen in der Maschinensteuerung gespeichert sind, und
- die rechnerunterstützte Ermittlung die Bestimmung des Dosierweges der Schnecke und/oder die Bestimmung des Umschaltpunktes beinhaltet.

Ein derartiges Verfahren ist bekannt.

Bei der Herstellung eines spritzgegossenen Werkstücks ist es erforderlich, vor Produktionsbeginn eine Einstellung der Spritzgießmaschine vorzunehmen. Diese Einstellung bezieht sich auf Daten, die von den spezifischen Maschinen-, Werkstoff- und Werkzeugparametern abhängen und aus diesen zu bestimmen sind.

Bekannterweise sind in der Maschinensteuerung, die eine Speichereinheit aufweist, Maschinenparameter abgelegt. Es handelt sich hierbei beispielsweise um den Schneckendurchmesser, den maximalen Hydraulikdruck, die maximale Schließkraft, den spezifischen Spritzdruck und die maximale Einspritzgeschwindigkeit.

Aus der **DE 40 25 221 A1** ist ein Optimierungsverfahren bekannt, bei dem ein rechnerunterstütztes Optimierungsprogramm verwendet wird, welches ein Grundwissen über die Regeln des Kunststoffspritzgießens und ein Kennlinienfeld aus Betriebsparametern und Qualitätsdaten umfaßt. Das Kennlinienfeld ist empirisch oder systematisch aufgrund eines Lern- und Merkvorganges beim Einfahren des jeweiligen Werkzeuges ermittelt und verfeinert worden. Der optimale Arbeitspunkt wird abrufbar gespeichert.

Verfahren zur rechnerunterstützten Ermittlung des optimalen Arbeitspunktes einer mit einer Maschinensteuerung ausgestatteten Spritzgießmaschine sind beispielsweise auch aus der **EP-A-0 607 431** oder der **JP-04 175 129 A** bekannt. Die erforderlichen Maschinenparameter werden in der Maschinensteuerung gespeichert und die spezifischen Werkzeugparameter werden eingegeben. Auf Basis der hinterlegten Parameter können alle für den Spritzgießprozeß erforderlichen Prozeßparameter rechnerunterstützt ermittelt werden.

Ähnliche Expertensysteme schlagen die **EP-A-0 566 738** oder die **JP-04 012821 A** vor, wobei hier zusätzlich der Dosierweg der Schnecke als Betriebsparameter mit berücksichtigt wird.

Weiterhin ist bekannt, daß z. B. bei Verarbeitung nur eines Kunststoffs die speziellen Materialdaten dieses Werkstoffs ebenfalls in der Speichereinheit der Maschinensteuerung hinterlegt sind. Hier kommen Daten wie obere und untere Verarbeitungstemperatur, Einfriertemperatur usw. in Betracht.

Zur automatischen Bestimmung von Spritzgießparametern ist ein Verfahren aus der **WO 91/14562** bekannt. Dort wird ein Optimierungsverfahren beschrieben, bei dem zunächst bei jedem Schuß die Fließ-Charakteristik, also das Schmelze-Fliessvolumen pro Zeit, mittels eines Sensors aufgenommen und der ermittelte Wert mit einem Referenzwert verglichen, der sich beim vorhergehenden Schuß ergab. Durch fortwährenden Vergleich zweier aufeinanderfolgender Schüsse wird eine optimierte Schnecken-Verschiebegeschwindigkeit über der Zeit ermittelt. Mittels dieses Verfahrens kann also die Vorgabe für die axiale Schnekkenbewegung über der Zeit bestimmt und optimiert werden.

Aus der **US 5,316,707** ist weiterhin die sensorische Aufnahme und Regelung der Spritzgießparameter bekannt, ohne daß dort spezifisch ausgesagt wird, wie die Parameter für einen optimalen Betriebspunkt zu ermitteln sind. Die **DE 37 43 351 A1** beschäftigt sich mit der Bestimmung, Auswertung und Öptimierung des Druckverlaufs in der Schmelze während des Einspritzens, um daraus eine optimale Vorgabe für die Einspritzgeschwindigkeit der Schnecke über der Zeit bzw. über dem Weg abzuleiten.

In der **US 4,816,197** wird schließlich ein Verfahren beschrieben, bei dem mehrere Probewerkstücke gespritzt werden. Dabei wird sowohl der Druck während des Spritzvorgangs als auch die Geschwindigkeit der Einspritzschnecke aufgenommen. Ziel ist es jedoch dort, die Viskosität der Kunststoffschmelze zu bestimmen.

Bei der Produktion eines neuen Loses von Werkstücken ist es nach dem Stand der Technik erforderlich, daß ein Maschineneinrichter die Maschinen- und insbesondere die Werkstoffparameter ergänzt bzw. überhaupt erst über die Eingabeeinheit der Maschine eingibt; weiterhin sind die spezifischen Werkzeugparameter, also die Daten, die das Werkstück definieren, einzugeben.

Der erfahrene Einrichter fertigt dann ein Testwerkstück und prüft dieses. Seine Aufgabe ist es insbesondere, den Dosierweg der Schnecke sowie den Umschaltpunkt vom Einspritzen auf Nachdruck festzulegen, wozu er aufgrund seiner Erfahrung in der Lage ist, wenn er ein erstes Testwerkstück vorliegen hat. Über weitere Iterationsschritte (mehrere Probewerkstücke) erhält er verbesserte Werte, die dann dem Spritzgießprozeß zugrundegelegt werden.

Bei Fertigung eines neuen Loses eines anderen Werkstückes wird in praxi häufig so vorgegangen, daß - sofern kein alter Parametersatz für das zu fertigende Werkstück vorhanden ist - der Satz eines ähnlichen Werkstücks zugrundegelegt wird. Der Fachmann ist in der Lage, gezielt Modifikationen an diesem Parametersatz vorzunehmen und ihn so an die aktuelle Fertigungsaufgabe anzupassen.

Nachteilig ist hier stets, daß nur der Fachmann, der über hinreichend Fertigungserfahrung verfügt, in der Lage ist, den Anfahrprozeß für ein neues Kunststoff-Werkstück zu fahren. Weiterhin ist es arbeitsaufwendig, daß auch der Fachmann auf Hilfsmittel, wie Werkstoffkataloge, angewiesen ist, wenn ein neues und aus anderem Material bestehendes Werkstück produziert werden soll.

Der Erfindung liegt daher die **Aufgabe** zugrunde, ein Verfahren zu schaffen, mit dem es möglich ist, ohne Hilfe des Fachmannes automatisiert eine Anfahrstrategie zur Auffindung des optimalen Betriebspunktes einer Spritzgießmaschine zu fahren. Es soll also in wirtschaftlicherer Weise - ohne Inanspruchnahme eines Spezialisten - das Auffinden des optimalen Betriebspunktes erfolgen.

Die **Lösung** der Aufgabe durch die Erfindung ist dadurch gekennzeichnet, daß die einzugebenden Werkzeugparameter (WZ) ausschließlich die Wanddicke des Werkstücks, vorzugsweise die größte, die Wanddicke des Werkstücks im Angußbereich, vorzugsweise die größte, und auf die projizierte Fläche des Werkstücks sind.

Zweckmäßige Weiterbildungen der Erfindung sind begenstand der abhängigen Ansprüche.

Auf die im Speicher der Maschinensteuerung angelegte Bibliothek für alle relevanten Werkstoffe sowie die ebenfalls abgespeicherten Maschinenparameter wird zurückgegriffen und die oben genannten Werkzeugparameter eingegeben. Es hat sich nämlich herausgestellt, daß nur diese Spezifikationen erforderlich sind, um in Kombination mit dem genannten Verfahren bereits alle relevanten Steuerdaten des Spritzgießprozesses für den optimalen Betriebspunkt zu ermitteln.

Das erfindungsgemäße Verfahren läuft dabei vorzugsweise wie folgt ab:
a) Zunächst werden die Werkzeugdaten (WZ) sowie der Werkstofftyp in die Steuerung eingegeben;
b) Damit werden die erforderlichen Einstellwerte für den Spritzgießprozeß in an sich bekannter Weise festgelegt; die Recheneinheit der Steuerung greift hierbei nunmehr auf die aus der abgespeicherten Materialbibliothek stammenden Daten zurück;
c) Anschließend wird rechnerunterstützt der Dosierweg (s_{DH}) der Schnecke (2) der Plastifiziereinheit (3) ermittelt, und zwar mittels mindestens eines Ermittlungs-Arbeitszyklus und einer sich an diesen Arbeitszyklus anschließenden Qualitätsbeurteilung des gefertigten Werkstücks durch den Maschinenbediener;
d) Dann wird rechnerunterstützt der Umschaltpunkt (UP) der Schnekke (2) ermittelt, und zwar mittels mindestens eines weiteren Ermittlungs-Arbeitszyklus;
e) Die ermittelten Werte für Dosierweg (s_{DH}) und den Umschaltpunkt (UP) der Schnecke (2) werden schließlich für die sich anschließende Produktion von Werkstücken verwendet.

Der Hinweis darauf, daß die Ermittlung des Dosierweges der Schnecke bzw. des Umschaltpunktes auf Nachdruck durch jeweils mindestens einen Ermittlungs-Arbeitszyklus erfolgt, ist so zu verstehen, daß es in bestimmten schwierigen Fällen erforderlich sein kann, daß nach der Qualitätsbeurteilung des gefertigten Testteils weitere Ermittlungs-Arbeitszyklen gefahren werden müssen, um optimale Werte zu erhalten.

Bei der Abfolge der genannten Arbeitsschritte ergibt sich schließlich ein kompletter Parametersatz, der die optimalen Fertigungsparameter darstellt. Die Qualitätsbeurteilung nach dem Spritzen eines Test-Werkstücks beschränkt sich auf einfache Kriterien, wie z. B. ob das gefertigte Teil bei vollständig gefüllter Form erfolgte, wodurch die Inanspruchnahme eines Spezialisten nicht mehr erforderlich ist.

Für das erfindungsgemäße Verfahren von besonderer Bedeutung ist die rechnerunterstützte Ermittlung des Dosierweges (s_{DH}) der Schnecke (2). Sie erfolgt durch folgende Arbeitsschritte:
c 1) Zunächst wird in einem Ermittlungs-Arbeitszyklus ein Probewerkstück gespritzt, wobei ein Dosierweg zugrundegelegt wird, der groß genug ist, ein vollständiges Füllen der Spritzgießform (4) sicherzustellen, vorzugsweise mit einem Dosierweg (s_{DH1}), der zwischen dem zwei- bis vierfachen Schneckendurchmesser (D) liegt; hierbei wird der sich ergebende Verlauf des Schneckenweges (s) über der Zeit (t) aufgenommen;
c 2) Dann wird der Schneckenvorlauf(s_{SV1}) und das Restpolster (s_{R1}) aus dem Schneckenweg-Zeit-Verlauf ermittelt;
c 3) Schließlich kann der Dosierweg (s_{DH}) aus den ermittelten Werten berechnet werden. Dies geschieht in der Art, daß am Ende des Dosierweges der Schnecke (2) ein vorgewähltes Restpolster (s_{R}) verbleibt, vorzugsweise von 10 % bis 30 % des Dosierweges (s_{DH}).

Der Dosierweg der Schnecke wird also durch die Grundüberlegung gefunden, daß zunächst die Werkzeugkavität vollständig mit Schmelze gefüllt sein muß. Erst dann setzt das üblicherweise verwendete Massepolster an. Der Probe-Spritzling wird also mit einem Schneckenvorlauf gefertigt, der sicherstellt, daß die gesamte Kavität gefüllt ist. Aus dem Schneckenweg-Zeit-Verlauf kann das effektive Restpolster entnommen werden. Die gesamte Kurve wir nunmehr in Ordinatenrichtung soweit nach unten verschoben, daß nur noch das gewünschte Massepolster (meist ca. 20 %) verbleibt.

Weiterhin wird vorteilhafterweise für die rechnerunterstützte Ermittlung des Umschaltpunktes (UP) der Schnecke (2) folgender Algorithmus verwendet:
d 1) Spritzen eines Werkstücks in einem Ermittlungs-Arbeitszyklus, vorzugsweise mit dem gemäßs Anspruch 4 gefundenen Dosierweg (s_{DH}) der Schnecke (2); dabei wird der sich ergebende Verlauf der Schneckenvorlaufgeschwindigkeit (v) über der Zeit (t) aufgenommen;
d 2) Ermittlung des Umschaltpunktes (UP) aus dem Schneckengeschwindigkeit-Zeit-Verlauf (v_{UP}), wobei der Punkt des Kurvenverlaufs (v(t)) maßgeblich ist, bei dem sich die Kurvensteigung stark ändert.

Die Grundidee besteht hier darin, daß mittels eines Probespritzlings - vorzugsweise bei Verwendung des bereits ermittelten optimalen Dosierweges der Schnecke - die Schneckengeschwindigkeit über der Zeit betrachtet wird. Fällt diese stark ab (= starke Änderung der Kurvensteigung), ist dies das Indiz dafür, daß die Kavität gefüllt ist. Dieser Punkt wird als Umschaltpunkt zugrundegelegt.

Es hat sich jedoch in praxi gezeigt, daß es aufgrund der Eigendynamik der Schaltventile der Spritzgießmaschine zu nicht optimalen Ergebnissen führt, wenn der so ermittelte Umschaltpunkt zugrundegelegt wird. Da die Eigendynamik stets eine - systematische - Verspätung der Wirkung des Umschaltens auf Nachdruck bedingt, ist gemäß einer Weiterbildung der Erfindung vorgesehen, daß der ermittelte Umschaltpunkt (UP) zeitlich um einen festgelegten Betrag (Δtᵥ) nach vorne verlegt wird.

Vorteilhafterweise wird so stets der optimale Betriebspunkt für das Umschalten gefunden, der nur einmal für jede Spritzgießmaschine experimentell herausgefunden werden muß.

Die Vorteile der Erfindung können wie folgt zusammengefaßt werden:
- Es wird verfahrensgemäß eine automatische Maschinenanfahrstrategie für eine Spritzgießmaschine vorgeschlagen, die den Dosier-, Einspritz- und Kühlvorgang sowie den Umschaltpunkt verfahrenstechnisch korrekt ermitteln kann.
- Das Verfahren läuft direkt in der Steuerung der Spritzgießmaschine ohne zusätzliche Hilfsmittel.
- Es gibt keine aufwendige Testreihen mehr für die Bestimmung des optimalen Arbeitspunktes. Der Einsatz eines Spezialisten ist nicht mehr erforderlich.
- Das Verfahren ist durchführbar auf jeder Spritzgießmaschine, die mit der standardmäßigen Sensorik ausgestattet ist.
- Die Maschinenbedienung wird einfach, kompakt und übersichtlich.
- Die Ermittlung des optimalen Betriebspunktes erfolgt mit Angabe von nur einigen wenigen werkzeugbezogenen Eckdaten.
- Das Ergebnis der Betriebspunktermittlung wird direkt in der Maschine in den Produktionsdatensatz übernommen. Dort ist ggf. eine Nacheditierbarkeit aller Daten gegeben.
- Die Anzahl der für die Ermittlung des optimalen Arbeitspunktes benötigten Test-Zyklen ist minimal; unter guten Voraussetzungen ist mit nur zwei Ermittlungs-Zyklen zu rechnen. Daraus resultiert ein geringer Rohstoffverbrauch für das Einrichten der Maschine.
- Abhängig von der bereits an einer Spritzgießmaschine vorhandenen Sensorik kann die Umschaltpunktermittlung entweder mittels eines Schmelzedrucksensors und/oder mittels eines Wegaufnehmersignals der Schneckenposition erfolgen.

In der Zeichnung ist eine Ausführungsform des erfindungsgemäßen Verfahrens dargestellt. Es zeigt:
- Fig. 1: schematisch den Aufbau einer Spritzgießmaschine,
- Fig. 2: schematisch die Aufteilung des Schneckendosierweges in die einzelnen Bestandteile,
- Fig. 3: das Schneckenweg-Zeit-Diagramm und
- Fig. 4: das Schneckengeschwindigkeit-Zeit-Diagramm mit integriertem Schneckenweg―Zeit―Diagramm.

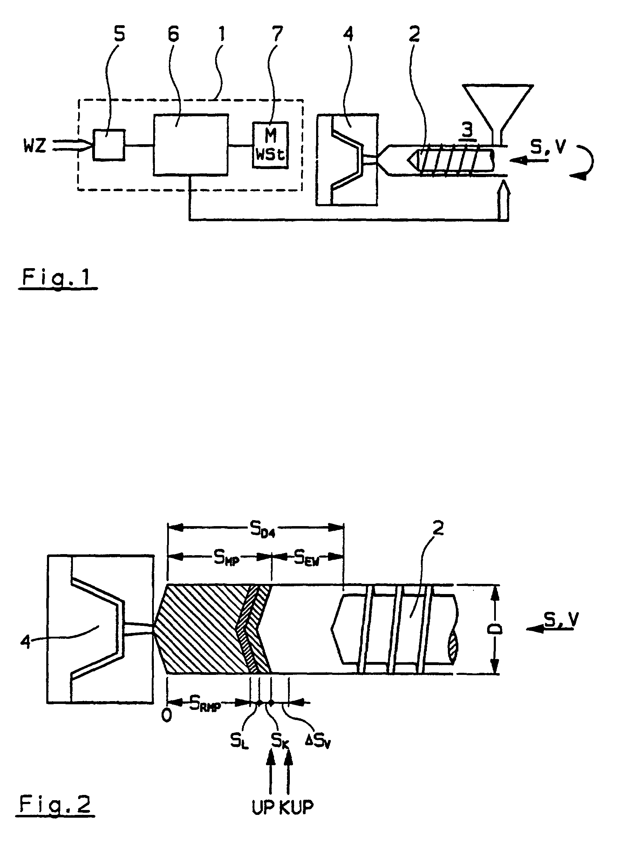

In Figur 1 ist der Aufbau einer Spritzgießmaschine schematisch dargestellt. Rohmaterial (z. B. Kunststoffgranulat) wird über einen Trichter der Plastifiziereinheit 3 zugeführt, in der es durch eine Schnecke 2 aufgeschmolzen wird; am Aufschmelzen sind in der Regel - nicht dargestellte - Heizbänder ebenfalls beteiligt. Die erzeugte Schmelze wird in eine Spritzgießform 4 eingespritzt, wozu sich die Schnecke 2 in ihrer Axialrichtung (in Fig. 1 nach links) um einen definierten Schneckenweg s mit einem ebenfalls definierten Geschwindigkeitsprofil v(t) verschiebt.

Die Steuerung bzw. Regelung der Schneckenbewegung bewerkstelligt die Maschinensteuerung 1 der Spritzgießmaschine, die neben einer Eingabeeinheit 5 und einem Rechner 6 auch einen Speicher 7 aufweist. Gemäß vorliegender Erfindung ist vorgesehen, daß lediglich die Werkzeugparameter WZ über die Eingabeeinheit 5 der Maschinensteuerung zugeführt werden; die Maschinenparameter M und Werkstoffparameter WSt - letztere für eine Vielzahl von verschiedenen Kunststoffen - sind bereits im Speicher 7 enthalten.

Die Maschinenparameter M ergeben sich für jede Spritzgießmaschine aus der vorliegenden Ausführungsform. Sie sind fest im Speicher 7 hinterlegt. Sie bestehen insbesondere aus dem eingesetzten Schneckendurchmesser D, dem maximalen Hydraulikdruck, der maximalen Schließkraft, dem spezifischen Spritzdruck, der maximalen Einspritzgeschwindigkeit u. a.

Die ebenfalls im Speicher 7 hinterlegte Bibliothek für alle relevanten Werkstoffe, d. h. für jeden Materialtyp, beinhaltet alle Daten, die für den Spritzgießprozeß von Bedeutung sind und die in die Berechnung des Betriebspunktes eingehen. Hier ist insbesondere zu nennen: die für ein bestimmtes Material zulässige maximale Umfangsgeschwindigkeit der Schnecke, die obere Zylindertemperatur, die untere Zylindertemperatur, die obere Werkzeugtemperatur, die untere Werkzeugtemperatur, der Einfrierpunkt, die Noflow-Temperatur, die Faktoren R und Q, die Regressionsfaktoren a und b, das Volumen bei 1 bar, der maximale spezifische Einspritzdruck und der spezifische Staudruck.

Als noch per Eingabeeinheit 5 in die Steuerung einzugebenden Werkzeugparameter WZ sind lediglich vorgesehen:
- die größte Wanddicke des Werkstücks,
- die größte Wanddicke des Werkstücks im Angußbereich und
- die projizierte Fläche des Werkstücks.

Die größten Wanddicken des Werkstück sind für die Berechnung der Kühlzeit, der Einspritzgeschwindigkeit und für die Bestimmung des Nachdruckniveaus erforderlich. Die projizierte Fläche dient der Berechnung der Schließkraft des Werkzeugs. All diese Berechnungen bzw. Ermittlungen erfolgen in an sich bekannter Weise.

Die Werkzeugparameter und Werkstückparameter stehen dabei in gewissen Bereichen quasi in einem komplementären Zusammenhang. Beispielsweise ergibt sich die Wanddicke des Werkstücks in einem definierten Bereich sowohl aus dem entsprechenden Wert des Werkstücks als auch durch die zugehörige Abmessung des durch die Werkzeugkavität bestimmten Hohlraums.

Die detaillierteren Verhältnisse beim Einspritzen von Schmelze in die Kavität des Werkzeugs 4 durch Axialbewegung der Schnecke 2 sind in Fig. 2 dargestellt. Die Schnecke 2 weist einen Schneckendurchmesser D auf, der in praxi häufig für die Abschätzung eines Maximalbetrags einzuspritzender Schmelze benutzt wird: Man kann in erster Näherung davon ausgehen, daß bei einem Schneckendosierweg s_{DH} = 3 x D hinreichend Schmelze ins Werkzeug 4 eingebracht wird.

Der Dosierweg der Schnecke s_{DH} setzt sich zusammen aus dem Einspritzweg der Schnecke s_{EW} und dem Massepolster s_{MP}. Am Übergang vom Einspritzweg zum Massepolster befindet sich der Umschaltpunkt auf Nachdruck UP. Das effektiv verbleibende Rest-Massepolster s_{RMP} ist jedoch geringer als das Massepolster s_{MP}; von letzterem abzuziehen ist der Anteil s_{K}, der für die Schmelzekompression steht, und der Anteil s_{L}, der Leckverluste der Rückstromsperre berücksichtigt.

Wie bereits oben erwähnt, hat es sich für den praktischen Betrieb herausgestellt, daß es aufgrund der Eigendynamik der Schaltventile zu nicht optimalen Ergebnissen führt, wenn der exakt ermittelte Umschaltpunkt für die Steuerung zugrundegelegt wird. Es wird daher vorgesehen, daß der ermittelte Umschaltpunkt UP zeitlich - und über die s(t)- und v(t)- Zusammenhänge damit auch örtlich, um einen experimentell festzulegenden Betrag Δsᵥ (bzw. Δtᵥ) nach vorne verlegt wird. So ergibt sich der korrigierte Umschaltpunkt KUP.

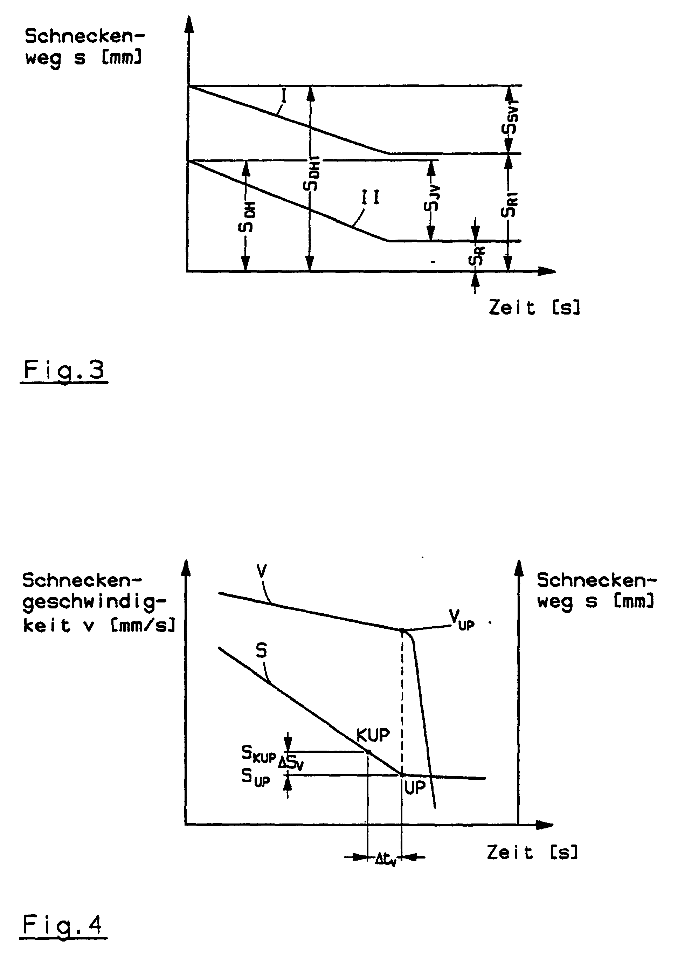

Das Verfahren zur Gewinnung eines optimalen Wertes für den Dosierweg der Schnecke s_{DH} geht aus Fig. 3 hervor. Aufgetragen ist der Schneckenweg s über der Zeit t. Die obere Kurve I gibt den Zeitverlauf der Schnecke bei einem Ermittlungs-Arbeitszyklus an. Der Dosierweg der Schnecke bei diesem Arbeitszyklus s_{DH1} ist so groß gewählt, daß eine sichere Füllung der Werkzeugkavität gewährleistet ist; vorzugsweise wird obiger Wert von s_{DH1} = 3 x D vorgesehen. Über der Zeit fällt der Schneckenweg (in Richtung 0, s. Fig. 2) ab, im vorliegenden Beispiel vereinfachend angenommen linear. Nach vollständiger Füllung der Form kann keine weitere Schmelze mehr in die Kavität eingebracht werden, weswegen die Schneckenposition praktisch konstant bleibt (waagrechter Ast der Kurve I in Fig. 3).

Der so gewonnenen Kurve kann direkt der Betrag für den Schneckenvorlauf beim Ermittlungs-Arbeitszyklus s_{SV1} entnommen werden; die Differenz zum Ordinaten-Nullpunkt stellt das Restpolster beim Ermittlungs- Arbeitszyklus s_{R1} dar. Dieses Restpolster ist i. d. R. natürlich sehr viel größer als jenes, das üblicherweise eingesetzt wird: Es wird meist ein Massepolster von ca. 20 % des Dosierweges vorgesehen. Zur Bestimmung des optimalen Dosierweges der Schnecke s_{DH} wird nunmehr die gewonnene Kurve I in Ordinatenrichtung verschoben, bis das sich ergebende optimale Rest-Massepolster s_{R} dem gewünschten Wert (also z. B. 20 % des Dosierweges) entspricht (s. Kurve II in Fig. 3). Dieses Rest-Massepolster s_{R} ergibt zusammen mit dem jetzt vorliegenden Schneckenvorlauf s_{SV} den optimalen Dosierweg der Schnecke s_{DH}.

Die Ermittlung des optimalen Umschaltpunktes UP wird anhand von Fig. 4 illustriert. Dort ist der Verlauf der Schneckengeschwindigkeit v sowie des Schneckenweges s über der Zeit t aufgetragen. Nachdem das Werkzeug vollständig mit Schmelze gefüllt ist, "kippt" die Geschwindigkeitskurve v(t), die bis dahin noch einen relativ flachen Verlauf hat, nach unten steil ab: Da die Form gefüllt ist und auch die Schmelze im Schneckenvorraum komprimiert ist, kann die Schnecke nicht weiter verfahren werden und nähert sich der Geschwindigkeit v = 0 an. Diesem Kipp-Punkt ist die Umschaltpunktsgeschwindigkeit v_{UP} zuzuordnen. Das Lot auf die Wegkurve - s. Fig. 4 - ergibt den Umschaltpunkt UP. Wie oben erwähnt, ist es sinnvoll, diesen Punkt UP zeitlich etwas, und zwar um einen experimentell gewonnenen Betrag, nach vorne zu verlagern. Daher ergibt sich der korrigierte Umschaltpunkt KUP durch zeitliche Verschiebung des Umschaltpunktes UP um den Zeitbetrag Δt_{V}. Der Schneckenweg am Umschaltpunkt s_{UP} verändert sich daher auf den "vorher" liegenden Schneckenweg s_{KUP} am korrigierten Umschaltpunkt KUP. Der Korrekturwert für diese "Vorverlegung" ist Δs_{V}.

Das erfindungsgemäße Verfahren kann somit beispielsweise in folgender Form ablaufen (hinter jeder Tätigkeit ist vermerkt, ob die Steuerung hier automatisch arbeitet ("automatisch") oder ob eine Aktion des Bedienpersonals erforderlich ist ("Bediener")):

| Arbeitsschritt *Nr*. | Tätigkeit | automatisch/ Bediener |
|---|---|---|
| 1 | Bildschirmseite anwählen und Automatikbetriebsart wählen | **Bediener** |
| 2 | Auswahl des Materials | **Bediener** |
| 3 | Eingabe der werkzeugbezogenen Daten (WZ) | **Bediener** |
| | - Größte Wanddicke des Werkstücks | |
| | - Wanddicke des Werkstücks im Angußbereich | |
| | - projizierte Fläche des Werkstücks vertikal zur Werkzeugtrennebene | |
| 4 | Aufruf des Programms für die automatische Parameterermittlung | **Bediener** |
| 5 | Berechnung und Anzeige folgender Einstellwerte | **automatisch** |
| | | |
| | - Zylindertemperatur (aus Material-datenbank) | |
| | - Werkzeugtemperatur | |
| | - Nachdruckzeit (aus Wanddicke im Angußbereich) | |
| | - Kühlzeit (aus max. Wanddicke) | |
| | - Schneckenumfangsgeschwindigkeit / Drehzahl (aus Materialdatenbank) | |
| | - Einspritzdruck | |
| | - Einspritzgeschwindigkeit | |
| | - Nachdruck | |
| | - Staudruck | |
| | | |
| | - Überprüfung der Schließkraft (aus projizierter Fläche und Druck) | |
| 6 | Übernahme der berechneten Werte Umstellung der Nachdruckumschaltung auf Zeitabhängigkeit | **automatisch** |

| Arbeitsschritt Nr. | Tätigkeit | **automatisch/ Bediener** |
|---|---|---|
| 7 | Berechnung folgender Einstellwerte für die Dosierwegbestimmung: | **automatisch** |
| | | |
| | - Dosierweg für Meßdatenermittlung | |
| | - Umschaltwert Zeit | |
| | - Meßdatenerfassungszeit | |
| | | |
| | Übernahme der berechneten Werte | |
| 8 | bei Bedarf: Ausspritzen und dosieren auf die berechneten Werte | **automatisch** |
| 9 | Durchführen eines Ermittlungs-Arbeitszyklus, d. h. Spritzen eines Test-Werkstücks Öffnen des Werkzeugs | **automatisch** |
| 10 | Qualitätsbeurteilung / Begutachtung des Test-Werkstücks | **Bediener** |
| 11 | Interaktive Abfrage über die Eingabeeinheit nach der Begutachtung des Bedieners: | **automatisch** |
| | | |
| | "Spritzling völlig gefüllt? JA/NEIN" | |
| 12 | Eingabe des Begutachtungsergebnisses in die Eingabeeinheit (--> JA/NEIN-Entscheidung) | **Bediener** |
| 13 | Fortsetzung der Parameterbestimmung | **automatisch** |
| | **bei Eingabe "NEIN"** | |
| | | |
| | --> Berechnung einer Einspritzdruckerhöhung | **automatisch** |
| | Rücksprung zu Arbeitsschritt 9 | **automatisch** |
| | **bei Eingabe "JA"** | |
| | | |
| | --> Berechnung des Dosierweges gemäß den ermittelten Werten | **automatisch** |
| | Ausspritzen und Dosieren auf den Dosierweg für die Teileproduktion, wobei bereits das Massepolster miteinkalkuliert ist | **automatisch** |

| Arbeitsschritt Nr. | Tätigkeit | **automatisch/ Bediener** |
|---|---|---|
| 14 | Starten der Umschaltpunktsermittlung | **automatisch** |
| 15 | Durchführen eines Ermittlungs-Arbeitszyklus, d. h. Spritzen eines Test-Werkstücks, ausgehend vom berechneten Dosierweg, zwecks Ermittlung des Umschaltpunktes Öffnen des Werkzeugs | **automatisch** |
| 16 | Anzeigen und Übernehmen des ermittelten Umschaltpunktes | **automatisch** |
| 17 | Beenden der Parameterermittlung und somit des Programms | **automatisch** |

### Bezugszeichenliste:

- 1: Maschinensteuerung der Spritzgießmaschine
- 2: Schnecke
- 3: Plastifiziereinheit
- 4: Spritzgießform, Werkzeug
- 5: Eingabeeinheit
- 6: Rechner
- 7: Speicher

- M: Maschinenparameter
- WSt: Werkstoffparameter
- WZ: Werkzeugparameter
- s: Schneckenweg [mm]
- v: Schneckengeschwindigkeit [mm/s]
- t: Zeit [s]
- D: Schneckendurchmesser

- s_{DH}: Dosierweg der Schnecke
- S_{EW}: Einspritzweg der Schnecke
- s_{MP}: Massepolster
- S_{K}: Schmelzekompression
- s_{L}: Leckverluste der Rückstromsperre
- s_{RMP}: Rest-Massepolster

- UP: Umschaltpunkt
- KUP: ' Korrigierter Umschaltpunkt

- Δsᵥ: Korrekturweg für Vorverlegung des Umschaltpunktes
- Δtᵥ: Korrekturzeit für Vorverlegung des Umschaltpunktes

- S_{DH1}: Dosierweg der Schnecke bei einem Ermittlungs-Arbeitszyklus
- s_{SV}: Schneckenvorlauf
- s_{SV}: 1 Schneckenvorlauf bei einem Ermittlungs-Arbeitszyklus
- S_{R}: Restpolster
- s_{R1}: Restpolster bei einem Ermittlungs-Arbeitszyklus
- S_{UP}: Schneckenweg Umschaltpunkt
- s_{KUP}: Schneckenweg korrigierter Umschaltpunkt
- V_{UP}: Umschaltpunktsgeschwindigkeit

## Patentansprüche

1. Verfahren zum rechnerunterstützten Ermitteln des optimalen Arbeitspunktes einer mit einer Maschinensteuerung (1) ausgestatteten Spritzgießmaschine,
- bei dem die Maschinenparameter (M) und die Werkstoffparameter (WSt) in der Maschinensteuerung (1) gespeichert sind und
- bei dem die spezifischen Werkzeugparameter (WZ) in die Maschinensteuerung (1) eingegeben werden,
wobei
- in der Maschinensteuerung (1) auf Basis der in dieser hinterlegten Maschinenparameter (M), Werkstoffparameter (WSt) und Werkzeugparameter (WZ) alle für den Spritzgießprozeß erforderlichen Prozeßparameter rechnerunterstützt ermittelt werden, und
- die Werkstoffparameter (WSt) für eine Vielzahl von verschiedenen Werkstoffen in der Maschinensteuerung (1) gespeichert sind, und
- die rechnerunterstützte Ermittlung die Bestimmung des Dosierweges (s_{DH}) der Schnecke (2) und/oder die Bestimmung des Umschaltpunktes (UP) beinhaltet,
**dadurch gekennzeichnet,**
**daß** die eingegebenen Werkzeugparameter (WZ) ausschließlich
- die Wanddicke des Werkstücks, vorzugsweise die größte,
- die Wanddicke des Werkstücks im Angußbereich, vorzugsweise die größte, und
- die projizierten Flächen des Werkstücks sind.

2. Verfahren nach Anspruch 1, **dadurch gekennzeichnet, daß** das Verfahren folgende Schritte, vorzugsweise in folgender Reihenfolge, umfaßt:
a) Eingabe der Werkzeugdaten (WZ) und des Werkstofftyps in die Maschinensteuerung (1);
b) Berechnung bzw. Festlegung der für den Spritzgießprozeß erforderlichen Einstellwerte in der Maschinensteuerung (1) in an sich bekannter Weise;
c) Rechnerunterstützte Ermittlung des Dosierweges (s_{DH}) der Schnecke (2) der Plastifiziereinheit (3) mittels mindestens eines Ermittlungs-Arbeitszyklus und einer sich an diesen Arbeitszyklus anschließenden Qualitätsbeurteilung des gefertigten Werkstücks durch den Maschinenbediener;
d) Rechnerunterstützte Ermittlung des Umschaltpunktes (UP) der Schnecke (2) mittels mindestens eines weiteren Ermittlungs-Arbeitszyklus;
e) Verwendung der ermittelten Werte für Dosierweg (s_{DH}) und Umschaltpunkt (UP) der Schnecke (2) für die sich anschließende Produktion von Werkstücken.

3. Verfahren nach Ansprüch 1 oder 2, **dadurch gekennzeichnet, daß** die rechnerunterstützte Ermittlung des Dosierweges (s_{DH}) der Schnecke (2) folgende Arbeitsschritte umfaßt:
c 1) Spritzen eines Werkstücks in einem Ermittlungs-Arbeitszyklus mit einem Dosierweg, der groß genug ist, ein vollständiges Füllen der Spritzgießform (4) sicherzustellen, vorzugsweise mit einem Dosierweg (s_{DH1}), der zwischen dem zwei- bis vierfachen Schneckendurchmesser (D) liegt; dabei Aufnahme des sich ergebenden Verlaufs des Schneckenweges (s) über der Zeit (t);
c 2) Ermittlung des Schneckenvorlaufs (s_{SV1}) und des Restpolsters (s_{R1}) aus dem Schneckenweg-Zeit-Verlauf;
c 3) Berechnung des Dosierweges (s_{DH}) aus den ermittelten Werten derart, daß am Ende des Dosierweges der Schnecke (2) ein vorgewähltes Restpolster (s_{R}) verbleibt, vorzugsweise von 10 % bis 30 % des Dosierweges (s_{DH}).

4. Verfahren nach mindestens einem der Ansprüche 1 bis 3, **dadurch gekennzeichnet, daß** die rechnerunterstützte Ermittlung des Umschaltpunktes (UP) der Schnecke (2) folgende Arbeitsschritte umfaßt:
d1) Spritzen eines Werkstücks in einem Ermittlungs-Arbeitszyklus, vorzugsweise mit dem gemäß Anspruch 4 gefundenen Dosierweg (s_{DH}) der Schnecke (2); dabei Aufnahme des sich ergebenden Verlaufs der Schneckenvorlaufgeschwindigkeit (v) über der Zeit (t);
d 2) Ermittlung des Umschaltpunktes (UP) aus dem Schneckengeschwindigkeit-Zeit-Verlauf (v_{UP}), wobei der Punkt des Kurvenverlaufs (v(t)) maßgeblich ist, bei dem sich die Kurvensteigung stark ändert.

5. Verfahren nach Anspruch 4, **dadurch gekennzeichnet, daß** der ermittelte Umschaltpunkt (UP) zeitlich um einen festgelegten Betrag (t_{V}) nach vorne verlegt wird.

## Claims

1. Process for computer-assisted determination of the optimum working point of an injection-moulding machine fitted with machine control (1),
- in which the machine parameters (M) and the material parameters (WSt) are stored in machine control (1), and
- in which the specific mould parameters (WZ) are entered into machine control (1),
wherein
- all process parameters required for the injection-moulding process are determined in computer-assisted manner in machine control (1) based on the machine parameters (M) filed in the latter, material parameters (WSt) and mould parameters (WZ), and
- the material parameters (WSt) for a plurality of different materials are stored in machine control (1), and
- the computer-assisted determination comprises investigation of the metering path (s_{DH}) of the screw (2) and/or investigation of the switch-over point (UP), **characterised in that** the mould parameters (WZ) entered are exclusively
- the wall thickness of the workpiece, preferably the largest,
- the wall thickness of the workpiece in the sprue region, preferably the largest, and
- the projected surfaces of the workpiece.

2. Process according to claim 1, **characterised in that** the process comprises the following steps, preferably in the following sequence:
a) input of mould data (WZ) and of the material type into machine control (1);
b) calculation or establishing the set values required for the injection-moulding process in machine control (1) in a manner known per se;
c) computer-assisted determination of the metering path (s_{DH}) of the screw (2) of the plastifying unit (3) by means of at least one determination working cycle and one quality assessment of the finished workpiece following this working cycle by the machine operator;
d) computer-assisted determination of the switch-over point (UP) of the screw (2) by means of at least one further determination working cycle;
e) use of the values determined for metering path (s_{DH}) and switch-over point (UP) of the screw (2) for the subsequent production of workpieces.

3. Process according to claim 1 or 2, **characterised in that** the computer-assisted determination of the metering path (s_{DH}) of the screw (2) comprises the following working steps:
c1) injection of a workpiece in one determination working cycle using a metering path which is large enough to ensure complete filling of the injection-moulding die (4), preferably using a metering path (s_{DH1}) which is between two times to four times the screw diameter (D); thus plotting of the resulting graph of the screw path (s) over time (t);
c2) determination of the screw advance (s_{SV1}) and the residual cushion (s_{R1}) from the screw path-time graph;
c3) calculation of the metering path (s_{DH}) from the values determined such that at the end of the metering path of the screw (2), a preselected residual cushion (s_{R}) remains, preferably 10 % to 30 % of the metering path (s_{DH}).

4. Process according to at least one of claims 1 to 3, **characterised in that** the computer-assisted determination of the switch-over point (UP) of the screw (2) comprises the following working steps:
d1) injection of a workpiece in one determination working cycle, preferably using the metering path (s_{DH}) of the screw (2) found according to claim 4; thus plotting of the resulting graph of the screw advance speed (v) over time (t);
d2) determination of the switch-over point (UP) from the screw speed-time graph (v_{UP}), wherein the point of the curve course (v(t)) is decisive, at which the curve gradient changes considerably.

5. Process according to claim 4, **characterised in that** the switch-over point (UP) determined is displaced forwards temporally by a fixed amount (t_{V}).

## Revendications

1. Procédé de détermination assistée par ordinateur du point optimal de fonctionnement d'une machine d'injection équipée d'une commande (1),
- dans lequel les paramètres (M) de la machine et les paramètres (WSt) du matériau sont mis en mémoire dans la commande (1) de la machine et
- dans lequel les paramètres spécifiques (WZ) du moule sont introduits dans la commande (1) de la machine,
- tous les paramètres de processus nécessaires au processus de moulage par injection étant déterminés avec assistance par ordinateur dans la commande (1) de la machine sur la base des paramètres (M) de la machine, des paramètres (WSt) du matériau et des paramètres (WZ) du moule déposés dans cette commande (1), et
- les paramètres (WSt) du matériau étant mis en mémoire dans la commande (1) de la machine pour un grand nombre de matériaux différents, et
- la détermination assistée par ordinateur contenant la détermination de la course de dosage (s_{DH}) de la vis (2) et/ou la détermination du point d'inversion (UP),
**caractérisé par le fait que**
les paramètres (WZ) du moule introduits sont exclusivement
- l'épaisseur de paroi de la pièce, de préférence la plus grande,
- l'épaisseur de paroi de la pièce dans la zone de la carotte, de préférence la plus grande, et
- les surfaces projetées de la pièce.

2. Procédé selon la revendication 1, **caractérisé par le fait qu'**il comprend les opérations suivantes, de préférence dans l'ordre suivant :
a) l'introduction des caractéristiques (WZ) du moule et du type de matériau dans la commande (1) de la machine,
b) la calcul ou la fixation de manière connue dans la commande (1) de la machine des valeurs de réglage nécessaires pour le processus de moulage par injection,
c) la détermination assistée par ordinateur de la course de dosage (s_{DH}) de la vis (2) du bloc de plastification (3) au moyen d'au moins un cycle de fonctionnement de détermination et une évaluation par le conducteur de la machine, après ce cycle de fonctionnement, de la qualité de la pièce fabriquée,
d) la détermination assistée par ordinateur du point d'inversion (UP) de la vis (2) au moyen d'au moins un autre cycle de fonctionnement de détermination,
e) l'utilisation des valeurs déterminées pour la course de dosage (s_{DH}) et le point d'inversion (UP) de la vis (2) pour la production qui suit de pièces.

3. Procédé selon l'une des revendications 1 et 2, **caractérisé par le fait que** la détermination assistée par ordinateur de la course de dosage (s_{DH}) de la vis (2) comprend les opérations suivantes :
c1) l'injection d'une pièce dans un cycle de fonctionnement de détermination avec une course de dosage suffisamment grande pour assurer un remplissage complet du moule d'injection (4), de préférence avec une course de dosage (s_{DH1}) comprise entre le double et le quadruple du diamètre (D) de la vis, avec enregistrement de la variation obtenue de la course (s) de la vis en fonction du temps (t),
c2) la détermination, à partir du diagramme course de la vis-temps, de la course avant (s_{SV1}) de la vis et du coussin restant (s_{R1}),
c3) le calcul de la course de dosage (s_{DH}) à partir des valeurs déterminées, de façon telle qu'à la fin de la course de dosage de la vis (2) subsiste un coussin restant choisi (s_{R}), de préférence de 10 % à 30 % de la course de dosage (s_{DH}).

4. Procédé selon au moins une des revendications 1 à 3, **caractérisé par le fait que** la détermination assistée par ordinateur du point d'inversion (UP) de la vis (2) comprend les opérations suivantes :
d1) l'injection d'une pièce dans un cycle de fonctionnement de détermination, de préférence avec la course de dosage (s_{DH}) de la vis (2) trouvée selon la revendication 4, avec enregistrement de la variation obtenue de la vitesse de course avant (v) de la vis en fonction du temps (t),
d2) la détermination du point d'inversion (UP) à partir du diagramme vitesse de la vis-temps (v_{UP}), le point du diagramme (v(t)) où la pente de la courbe change beaucoup étant déterminant.

5. Procédé selon la revendication 4, **caractérisé par le fait que** le point d'inversion (UP) déterminé est avancé dans le temps d'une quantité fixée (tᵥ).
